# EUROPÄISCHE PATENTSCHRIFT

(11) **EP 3 875 215 B1**
(45) Veröffentlichungstag und Bekanntmachung des Hinweises auf die Patenterteilung: **30.11.2022**
(21) Anmeldenummer: 21160537.3
(22) Anmeldetag: 03.03.2021
(51) Int. Cl.: B23Q 1/00

(54) **NULLPUNKTSPANNPLATTE, WERKZEUGMASCHINE MIT SELBIGER UND SPANNVORRICHTUNG**
ZERO POINT CLAMPING PLATE, MACHINE TOOL WITH THE SAME AND CLAMPING DEVICE
PLAQUE DE SERRAGE À POINT ZÉRO, MACHINE-OUTIL POURVUE D'UNE TELLE PLAQUE DE SERRAGE ET DISPOSITIF DE SERRAGE

(30) Priorität: 03.03.2020 DE 102020105722
(43) Veröffentlichungstag der Anmeldung: 08.09.2021
(73) Patentinhaber: HVM Technology GmbH, 28876 Oyten (DE)
(72) Erfinder: HENKE, Volker, 28876 Oyten (DE); VIETS, Henrico, 27404 Elsdorf (DE); MEIER, Matthias, 28876 Oyten (DE)
(74) Vertreter: Eisenführ Speiser

(56) Entgegenhaltungen:
- EP-A1- 1 595 641
- DE-A1-102016 009 895
- DE-U1-202014 104 201

## Beschreibung

Die Erfindung betrifft eine Nullpunktspannplatte zur Montage von Spannvorrichtungen auf Werkzeugmaschinen, insbesondere auf Fräs- und/oder Drehmaschinen, mit einer Mehrzahl von Montageausnehmungen, die dazu eingerichtet sind, jeweils ein korrespondierend dimensioniertes Montageelement einer Spannvorrichtung in sich aufzunehmen, und einem in die Spannplatte eingelassenen Befestigungsmechanismus, der dazu eingerichtet ist, die Montageelemente reversibel lösbar zu fixieren, wenn jene sich mit den Montageausnehmungen in Eingriff befinden, wobei der Befestigungsmechanismus ein Antriebselement, beispielsweise eine Antriebsspindel, aufweist und mindestens einen Klemmkeil, der mit dem Antriebselement wirkverbunden und dazu eingerichtet ist, sich als Funktion einer Bewegung des Antriebselements, beispielsweise einer Rotationsbewegung der Antriebsspindel, oder einer Translationsbewegung eines Stößels, der hydraulisch, mechanisch oder elektromagnetisch betätigt sein kann, in die Montageausnehmungen hinein zu erstrecken.

Unter Fräs- und/oder Drehmaschinen sind Fräsmaschinen, Drehmaschinen, Fräsdrehmaschinen und Drehfräsmaschinen zu verstehen.

Die Erfindung betrifft ferner eine Werkzeugmaschine, insbesondere eine Fräs- und/oder Drehmaschine, mit einer solchen Nullpunktspannplatte, die eine Mehrzahl von Montageausnehmungen aufweist, sowie mit einer Spannvorrichtung, welche eine Mehrzahl von zu den Montageausnehmungen korrespondierend dimensionierten Montageelementen aufweist, die jeweils mit einer der Montageausnehmungen in Eingriff stehen.

Ferner betrifft die Erfindung eine Spannvorrichtung zum Spannen von Werkstücken, die dazu eingerichtet ist, mittels einer Nullpunktspannplatte auf Werkzeugmaschinen, insbesondere auf Fräs- und/oder Drehmaschinen, montiert zu werden, mit einer Mehrzahl von Montageausnehmungen, die dazu eingerichtet sind, jeweils ein korrespondierend dimensioniertes Montageelement einer Spannplatte in sich aufzunehmen, und einem in die Spannvorrichtung eingelassenen Befestigungsmechanismus, der dazu eingerichtet ist, die Montageelemente reversibel lösbar zu fixieren, wenn jene sich mit den Montageausnehmungen in Eingriff befinden, wobei der Befestigungsmechanismus ein Antriebselement aufweist, und mindestens einen Klemmkeil, der mit dem Antriebselement wirkverbunden und dazu eingerichtet ist, sich als Funktion einer Bewegung des Antriebselements in die Montageausnehmungen hinein zu erstrecken.

Die Erfindung betrifft auch ein Nullpunktspannsystem für Werkzeugmaschinen, insbesondere für Fräs- und/oder Drehmaschinen, einer Nullpunktspannplatte, die dazu eingerichtet ist, ortsfest relativ zu der Werkzeugmaschine angeordnet zu werden, einer Spannvorrichtung zum Spannen von Werkstücken, die dazu eingerichtet ist, auf der Spannplatte montiert zu werden, und einem Befestigungsmechanismus, der dazu eingerichtet ist, die Spannvorrichtung an der Spannplatte reversibel lösbar zu befestigen, wobei die Spannplatte in oben bezeichneter Art ausgebildet ist.

Ebenfalls betrifft die Erfindung ein Nullpunktspannsystem für Werkzeugmaschinen, insbesondere für Fräs- und/oder Drehmaschinen, mit einer Nullpunktspannplatte, die dazu eingerichtet ist, ortsfest relativ zu der Werkzeugmaschine angeordnet zu werden, einer Spannvorrichtung zum Spannen von Werkstücken, die dazu eingerichtet ist, auf der Spannplatte montiert zu werden, und einem Befestigungsmechanismus, der dazu eingerichtet ist, die Spannvorrichtung an der Spannplatte reversibel lösbar zu befestigen, wobei die Spannvorrichtung in oben bezeichneter Art ausgebildet ist.

Nullpunktspannplatten, Werkzeugmaschinen, Spannvorrichtungen und Nullpunktspannsysteme der vorstehend bezeichneten Art sind in der Werkzeugmaschinenindustrie allgemein bekannt und dienen zur möglichst positionsgetreuen und wiederholgenauen Montage von Spannvorrichtungen auf Maschinentischen von Werkzeugmaschinen. Die möglichst genaue und wiederholgenaue Positionierung der Spannvorrichtungen relativ zu den Werkzeugmaschinen ist zur Minimierung von Rüstzeiten und damit einhergehend zur Optimierung der Fertigungsqualität und des Fertigungsprozesses heutzutage unabdingbar.

Die DE 20 2014 104201 U1 offenbart eine Nullpunktspannplatte, auf der der Oberbegriff des Anspruchs 1 basiert und die DE 10 2016 009895 A1 offenbart eine Spannvorrichtung, auf der der Oberbegriff des Anspruchs 14 basiert.

Nullpunktspannsysteme der vorstehend bezeichneten Art basieren auf dem Ansatz, dass die Spannvorrichtung mehrere Montageelemente, auch bezeichnet als Montagefüße, aufweist, während das Spannsystem auf dem Maschinentisch eine Spannplatte enthält, welche Montageausnehmungen aufweist, die so zueinander angeordnet sind, dass die Spannvorrichtungen mit ihren, in einem vorbestimmten Muster angeordneten, Montageelementen passend in die Spannplatte eingreifen kann. Diejenigen Ausnehmungen auf der Spannplatte, die für eine Spannvorrichtung vorgesehen sind, sind zu sogenannten Spannnestern gruppiert.

Konventionelle Spannplatten umfassen einen in die Spannplatte integrierten Befestigungsmechanismus, mit dem die Montageelemente der Spannvorrichtungen in einer Referenzposition, Nullpunkt bzw. Nullposition genannt, arretiert werden können. Es hat sich als vorteilhaft herausgestellt, die Montageausnehmungen auf der Spannplatte in einem vorbestimmten Raster äquidistant anzuordnen, damit eine möglichst flexible Anordnung der Spannvorrichtungen auf der Spannplatte möglich ist.

Damit eine zuverlässige Befestigung der Spannvorrichtung auf der Spannplatte möglich ist, muss der Spannmechanismus unabhängig von der Positionierung der Spannvorrichtung auf der Spannplatte eine präzise Positionierung der Spannvorrichtung einerseits und eine ausreichend hohe Haltekraft andererseits gewährleisten.

Während die bislang erhältlichen Nullpunktspannplatten und Nullpunktspannsysteme eine im Allgemeinen zufriedenstellende Positioniergenauigkeit bieten, wird bei der Haltekraft noch Verbesserungsbedarf gesehen.

Der Erfindung lag demzufolge die Aufgabe zugrunde, eine Nullpunktspannplatte der eingangs bezeichneten Art, eine Werkzeugmaschine der eingangs bezeichneten Art, eine Spannvorrichtung der eingangs bezeichneten Art und Nullpunktspannsysteme der eingangs bezeichneten Art dahingehend zu verbessern, dass die Haltekraft der Spannvorrichtung auf der Werkzeugmaschine verbessert wird, ohne Einbußen bei der Präzision der Positionierung in Kauf nehmen zu müssen.

Die Erfindung löst die ihr zugrundeliegende Aufgabe gemäß einem ersten Aspekt bei einer solchen Nullpunktspannplatte bzw. bei einer solchen Werkzeugmaschine, und/oder bei einem solchen Nullpunktspannsystem, indem im Kraftfluss zwischen dem Antriebselement und dem Klemmkeil mindestens ein Hebelarm zur Kraftverstärkung vorgesehen ist. Die Erfindung macht sich die Erkenntnis zunutze, dass mittels der Einbindung von Hebelarmen in den Kraftfluss zwischen Antriebselement und Klemmkeil mit geringstmöglichem zusätzlichen Teileaufwand eine signifikante Erhöhung der vom Klemmkeil erzeugten Klemmkraft erzeugt werden kann, weil sich mit dem Hebelarm konstruktiv einfach eine Umsetzung von einem von dem Antriebselement bewegten ersten Koppelglied eine Bewegung eines zweiten, mit dem Hebelarm verbundenen Koppelglieds mit geringerem Weg, aber höherer Kraftübertragung pro Bewegungsinkrement des Antriebselements umsetzen lässt, abhängig lediglich vom Winkel des Hebelarms relativ zu den beiden linear bewegten Koppelgliedern.

In einer bevorzugten Weiterbildung der Erfindung ist der Klemmkeil zwischen einer zurückgezogenen Startposition und einer ausgefahrenen Endposition hin- und herbewegbar in der Spannplatte angeordnet, wobei der Hebelarm derart mit dem Klemmkeil gekoppelt ist, dass die Wegänderungsrate des Klemmkeils als Funktion der Bewegung des Antriebselements abnimmt, je weiter sich der Klemmkeil in Richtung seiner Endposition bewegt. Diese Ausführungsform basiert auf dem Ansatz, dass mit einer Hebelarmübertragung der vorstehend beschriebenen Art und Weise ähnlich wie bei einem Kniehebel bei Beginn des Klemmvorgangs der Montageelemente in den Montageausnehmungen noch keine hohe Kraftübertragung notwendig ist, wohl aber ein großer Weg des Klemmkeils, damit dieser zügig seine Klemmposition, die nahe der Endposition liegt, einnehmen kann. Bei fortschreitender Bewegung des Klemmkeils in Richtung seiner Endposition bewegt sich der Klemmkeil relativ zur Bewegung des Antriebselements dann zwar langsamer, es findet aber im Gegenzug eine höhere Kraftübertragung statt. So liegt eine Wechselwirkung zwischen der Antriebskraft beziehungsweise dem Antriebsmoment des Antriebselements und der durch die Antriebskraft beziehungsweise das Antriebsmoment hervorgerufenen Wegänderung des Klemmkeils. Je weniger Wegänderung der Klemmkeil pro Bewegungsinkrement des Antriebselements zurücklegen muss, desto höher ist die damit erzeugte Kraft des Klemmkeils.

In einer weiteren bevorzugten Ausführungsform ist der Klemmkeil mittels eines Hebelarms mit einem Querschieber gekoppelt, und der Querschieber ist seinerseits mit dem Antriebselement wirkverbunden.

Vorzugsweise weist der Querschieber eine Achse in Querrichtung auf, und der Hebelarm ist um eine erste Achse schwenkbar an dem Querschieber und um eine zweite Achse schwenkbar an dem Klemmkeil angeordnet, wobei die erste und zweite Achse vorzugsweise parallel und senkrecht zur Längsachse des Antriebselements ausgerichtet sind. Der Hebelarm weist weiter vorzugsweise eine Längsachse auf, die durch die beiden Achsen hindurchgeht, wobei der Winkel zwischen der Längsachse und der Achse in Querrichtung in einem Bereich von 40° bis 50° liegt, wenn sich der Klemmkeil in der Startposition befindet, und in einem Bereich von 65° bis 75° liegt, wenn sich der Klemmkeil in der Endposition befindet.

Für die Wirkverbindung zwischen Querschieber und Antriebselement gibt es verschiedene bevorzugte Ausgestaltungen. Gemäß einer ersten bevorzugten Ausgestaltung ist der Querschieber mittels einer Schrägführung mit einem Längsschieber gekoppelt, wobei der Längsschieber seinerseits mittels eines Gewindes mit dem Antriebselement gekoppelt ist. Die Schrägführung zwischen Querschieber und Längsschieber kann beispielsweise als Kulissenführung mit gegenseitig ineinandergreifenden Vorsprüngen und Nuten ausgebildet sein, oder als Anordnung korrespondierend angeordneter, schräg aneinander abgleitender Körper und/oder Flächen. Die Kopplung mittels Schrägführung ist mechanisch einfach beherrschbar und erfordert wenig Bauraum und gleichzeitig ist die Verbindung geeignet, ein relativ starres Kraftübertragungssystem mit wenig Elastizität bereitzustellen.

Eine weitere bevorzugte Form der Wirkverbindung zwischen Querschieber und Antriebselement sieht vor, dass die vorstehend beschriebenen Hebelarme zwischen Klemmkeil und Querschieber erste Hebelarme sind, und dass der Befestigungsmechanismus ferner einen zweiten Hebelarm aufweist, der den Längsschieber schwenkbar mit dem Querschieber koppelt.

In dieser Ausführungsform wird vorzugsweise auch der zweite Hebelarm zur Kraftverstärkung ausgelegt, sodass eine zweistufige Kraftvergrößerung im Kraftfluss zwischen Antriebselement und Klemmkeil erfolgen kann.

Vorzugsweise ist der Querschieber zwischen einer zurückgezogenen Startposition und einer ausgefahrenen Endposition hin- und herbewegbar, und der zweite Hebelarm ist derart mit dem Querschieber gekoppelt, dass die Wegänderungsrate des Querschiebers als Funktion der Bewegung des Antriebselements abnimmt, je weitersich der Querschieber in Richtung seiner Endposition bewegt. Hierbei ist vorzugsweise der zweite Hebelarm um eine dritte Achse schwenkbar an dem Längsschieber, und um eine vierte Achse schwenkbar an dem Querschieber angeordnet, wobei der zweite Hebelarm eine Längsachse aufweist, die durch die beiden Achsen hindurchgeht, und wobei der Winkel zwischen der Längsachse des zweiten Hebelarms und der Längsachse der Antriebsspindel in einem Bereich von 30° bis 40° liegt, wenn sich der Querschieber in der Startposition befindet, und in einem Bereich von 65° bis 75° liegt, wenn sich der Querschieber in der Endposition befindet.

In einer weiteren bevorzugten Ausführungsform der Spannplatte weist die Spannplatte eine Mehrzahl von Spannnestern auf, wobei jedes Spannnest vier Montageausnehmungen aufweist, und wobei der Befestigungsmechanismus für jedes Spannnest ein Klemmkeilpaar mit zwei Klemmkeilen aufweist, die mit dem Antriebselement wirkverbunden und dazu eingerichtet sind, sich als Funktion einer Bewegung des Antriebselements in die Montageausnehmungen hinein zu erstrecken, wobei für jedes Klemmkeilpaar im Kraftfluss zwischen dem Antriebselement und dem Klemmkeil jeweils zwei Hebelarme zur Kraftverstärkung vorgesehen sind. Eine symmetrische Anordnung der Hebelarme führt dazu, dass die Kraftübertragung nach Art eines Kniehebels erfolgt. Deshalb wird der Begriff des Kniehebels nachfolgend allgemein für, insbesondere symmetrisch angeordnete, Hebelarmpaare verwendet.

Die Klemmkeile des Klemmkeilpaars sind vorzugsweise zwischen einer zurückgezogenen Startposition und einer ausgefahrenen Endposition hin- und herbewegbar in der Spannplatte angeordnet, wobei der jeweilige Kniehebel derart mit dem jeweiligen Klemmkeil gekoppelt ist, dass die Wegänderungsrate des Kniehebels als Funktion der Bewegung des Antriebselements abnimmt, je weiter sich der Klemmkeil in Richtung seiner Endposition bewegt.

Weiter vorzugsweise ist der jeweilige Kniehebel mit einem Querschieber gekoppelt, und der Querschieber ist seinerseits mit dem Antriebselement wirkverbunden. Dies erfolgt vorzugsweise gemäß einer der vorstehend beschriebenen bevorzugten Alternativen. An jedem Querschieber können ein oder mehrere Kniehebel angeschlossen sein, sodass in Querrichtung mehrere Spannnester ausgebildet werden können, ein Spannnest pro Kniehebel.

Vorzugsweise weist der jeweilige Querschieber eine Achse in Querrichtung auf, nachfolgend auch als Querrichtungsachse bezeichnet, wobei der jeweilige Hebelarm des Kniehebels um eine erste Achse schwenkbar an dem jeweiligen Querschieber, und um eine zweite Achse schwenkbar an dem jeweiligen Klemmkeil angeordnet ist, wobei der jeweilige Hebelarm des Kniehebels eine Längsachse aufweist, die durch die beiden Achsen hindurchgeht, und wobei der Winkel zwischen der Längsachse relativ und der Querrichtungs-Achse in einem Bereich von 40° bis 50° liegt, wenn sich der Klemmkeil in der Startposition befindet, und in einem Bereich von 65° bis 75° liegt, wenn sich der Klemmkeil in der Endposition befindet.

Weiter vorzugsweise ist der jeweilige Querschieber der Spannplatte mittels einer Schrägführung mit einem Längsschieber gekoppelt, wobei der Längsschieber wiederum mittels eines Gewindes mit dem Antriebselement gekoppelt ist.

Die vorstehend beschriebenen Hebelarme des Kniehebels sind vorzugsweise erste Hebelarme, und der Befestigungsmechanismus weist ferner für jeden Querschieber einen zweiten Hebelarm auf, der den Längsschieber schwenkbar mit dem jeweiligen Querschieber koppelt. Weiter vorzugsweise ist der jeweilige Querschieber zwischen einer zurückgezogenen Startposition und einer ausgefahrenen Endposition hin- und herbewegbar, und der zweite Hebelarm ist derart mit dem jeweiligen Querschieber gekoppelt, dass die Wegänderungsrate des jeweiligen Querschiebers als Funktion der Rotationsbewegung des Antriebselements abnimmt, je weiter sich der Querschieber in Richtung seiner Endposition bewegt.

Auch bei der Ausführungsform mit mehreren Spannnestern ist der zweite Hebelarm vorzugsweise um eine dritte Achse schwenkbar an dem Längsschieber, und um eine vierte Achse schwenkbar an dem jeweiligen Querschieber angeordnet, wobei der zweite Hebelarm eine Längsachse aufweist, die durch die beiden Achsen hindurchgeht, und wobei der Winkel der Längsachse des zweiten Hebelarms in einem Bereich von 30° bis 40° relativ zur Längsachse des Antriebselements liegt, wenn sich der Querschieber in der Startposition befindet, und in einem Bereich von 65° bis 75° liegt, wenn sich der Querschieber in der Endposition befindet.

Vorzugsweise ist die Antriebsspindel mit einem oder mehreren Längsschiebern versehen. Weiter vorzugsweise sind an jedem Längsschieber zwei Querschieber angeschlossen. Sofern die Wirkverbindung zwischen den mehreren Querschiebern und dem jeweiligen Längsschieber mittels der zweiten Hebelarme wie vorstehend beschrieben erfolgt, bilden die zweiten Hebelarme einen zweiten Kniehebel aus, für den das gleiche Wirkprinzip wie vorstehend beschrieben für den ersten Hebelarm gilt.

In einer weiteren bevorzugten Ausführungsform ist das Antriebselement mit mehreren Längsschiebern wirkverbunden, wobei jeder der Längsschieber mit einem oder mehreren Querschiebern wirkverbunden ist. Pro Spannnestreihe in Richtung der Längsachse des Antriebselements kann ein Längsschieber vorgesehen werden, was die Flexibilität des Nullpunktspannsystems nicht nur in Querrichtung, sondern auch in Längsrichtung des Antriebselements erhöht und das System zumindest in Grenzen skalierbar macht.

In einer bevorzugten Ausführungsform ist das Antriebselement eine Antriebsspindel. Vorzugsweise weist die Antriebsspindel einen ersten Gewindeabschnitt mit einer ersten Steigungsrichtung auf, mit welchem ein erster Längsschieber in Eingriff steht, und wenigstens einen zweiten Gewindeabschnitt, vorzugsweise mit einer der ersten Steigungsrichtung entgegengesetzten zweiten Steigungsrichtung, mit welchem ein zweiter Längsschieber in Eingriff steht. Vorzugsweise ist jeder dieser Längsschieber mit einem oder besonders bevorzugt zwei Querschiebern wirkverbunden in vorstehend beschriebener Art und Weise.

Die Erfindung wurde vorstehend anhand eines ersten Aspekts bezogen auf die erfindungsgemäße Spannplatte beschrieben.

Die Erfindung betrifft in einem weiteren Aspekt, wie eingangs erwähnt, eine Werkzeugmaschine. Bei dieser eingangs bezeichneten Werkzeugmaschine löst die Erfindung die eingangs bezeichnete Aufgabe, indem die Nullpunktspannplatte nach einer der vorstehend beschriebenen bevorzugten Ausführungsformen ausgebildet ist. Die erfindungsgemäße Werkzeugmaschine macht sich die gleichen Vorteile und die gleichen bevorzugten Ausführungsformen zu eigen wie die erfindungsgemäße Nullpunktspannplatte, weswegen zur Vermeidung von Wiederholungen auf die vorstehenden Ausführungen verwiesen wird.

In einem zweiten Aspekt betrifft die Erfindung, wie eingangs erwähnt, eine Spannvorrichtung. Bei der eingangs bezeichneten Spannvorrichtung löst die Erfindung die eingangs bezeichnete Aufgabe, indem die Spannvorrichtung hinsichtlich des in sie eingelassenen Befestigungsmechanismus wie die Nullpunktspannplatte nach einer der vorstehend beschriebenen bevorzugten Ausführungsformen ausgebildet ist.

In einer bevorzugten Ausführungsform dieses zweiten Aspekts weist die Spannvorrichtung genau ein Spannnest, beispielsweise mit vier Montageausnehmungen, auf. Vorzugsweise ist dann der Klemmkeil mittels des Hebelarms mit dem Antriebselement gekoppelt, wobei das Antriebselement eine wenigstens teilweise translatorische Bewegung ausführt. Gemäß dieser bevorzugten Ausführungsform wird der Kraftfluss also nicht erst über einen Querschieber hergestellt, der mit dem Antriebselement wirkverbunden ist. Mit anderen Worten überträgt das Antriebselement selbst eine Antriebskraft über den Klemmhebel auf den Klemmkeil. In Ausführungsformen mit zwei Klemmkeilen weist der Befestigungsmechanismus vorzugsweise zwei Klemmhebel auf. Die Klemmhebel sind vorzugsweise wie in den vorstehend beschriebenen Ausführungsformen ausgebildet und treiben jeweils einen Klemmkeil kraftverstärkend an.

Ferner betrifft die Erfindung, wie eingangs erwähnt, Nullpunktspannsysteme. Bei den eingangs bezeichneten Spannsystemen löst die Erfindung die eingangs bezeichnete Aufgabe, indem die Spannsysteme hinsichtlich des in die Nullpunktspannplatte oder in die Spannvorrichtung eingelassenen Befestigungsmechanismus wie die Nullpunktspannplatte nach einer der vorstehend beschriebenen bevorzugten Ausführungsformen ausgebildet sind.

Die Erfindung schlägt also gemäß dem ersten Aspekt ein Nullpunktspannsystem für Werkzeugmaschinen, insbesondere für Fräs- und/oder Drehmaschinen vor, mit einer Nullpunktspannplatte, die dazu eingerichtet ist, ortsfest relativ zu der Werkzeugmaschine angeordnet zu werden, einer Spannvorrichtung zum Spannen von Werkstücken, die dazu eingerichtet ist, auf der Spannplatte montiert zu werden, und einem Befestigungsmechanismus, der dazu eingerichtet ist, die Spannvorrichtung an der Spannplatte reversibel lösbar zu befestigen, wobei die Spannplatte nach einer der vorstehend beschriebenen bevorzugten Ausführungsformen des ersten Aspekts ausgebildet ist.

Alternativ schlägt die Erfindung gemäß dem zweiten Aspekt ein Nullpunktspannsystem für Werkzeugmaschinen vor, insbesondere für Fräs- und/oder Drehmaschinen, mit einer Nullpunktspannplatte, die dazu eingerichtet ist, ortsfest relativ zu der Werkzeugmaschine angeordnet zu werden, einer Spannvorrichtung zum Spannen von Werkstücken, die dazu eingerichtet ist, auf der Spannplatte montiert zu werden, und einem Befestigungsmechanismus, der dazu eingerichtet ist, die Spannvorrichtung an der Spannplatte reversibel lösbar zu befestigen, wobei die Spannvorrichtung nach einer der vorstehend beschriebenen bevorzugten Ausführungsformen des zweiten Aspekts ausgebildet ist.

Die erfindungsgemäße Spannvorrichtung und die erfindungsgemäßen Nullpunktspannsysteme machen sich die gleichen Vorteile und die gleichen bevorzugten Ausführungsformen zu eigen wie die erfindungsgemäße Nullpunktspannplatte. Aus diesem Grund wird zur Vermeidung von Wiederholungen auch bezüglich der erfindungsgemäßen Spannvorrichtung und der erfindungsgemäßen Nullpunktspannsysteme auf die vorstehenden Ausführungen verwiesen.

Die Erfindung wird nachfolgend anhand eines bevorzugten Ausführungsbeispiels unter Bezugnahme auf die beigefügten Figuren näher erläutert. Hierbei zeigen:
- Figur 1: eine Draufsicht auf eine erfindungsgemäße Nullpunktspannplatte gemäß einem bevorzugten Ausführungsbeispiel gemäß dem ersten Aspekt,
- Figur 2: eine Untersicht auf die Spannplatte gemäß Figur 1,
- Figur 3: eine Detailansicht zu Figur 2,
- Figur 4: eine Untersicht auf eine Nullpunktspannplatte gemäß einem zweiten bevorzugten Ausführungsbeispiel, und
- Figur 5: eine schematische räumliche Darstellung eines Nullpunktspannsystems gemäß einem bevorzugten Ausführungsbeispiel des zweiten Aspekts.

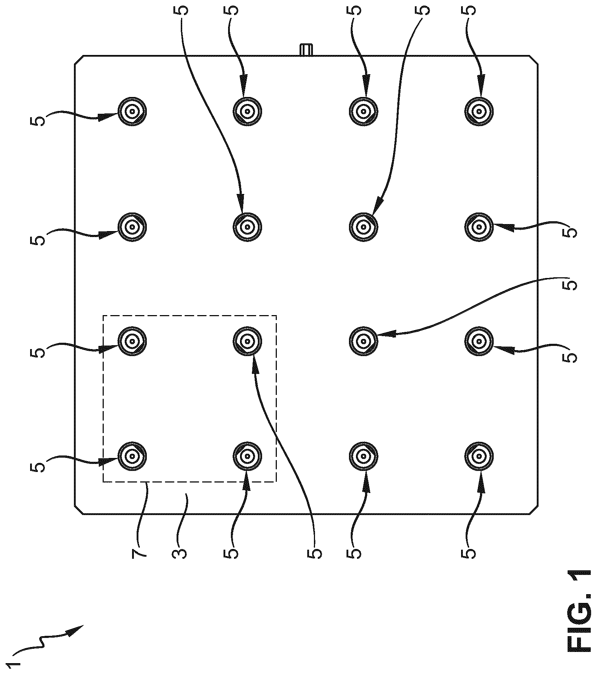

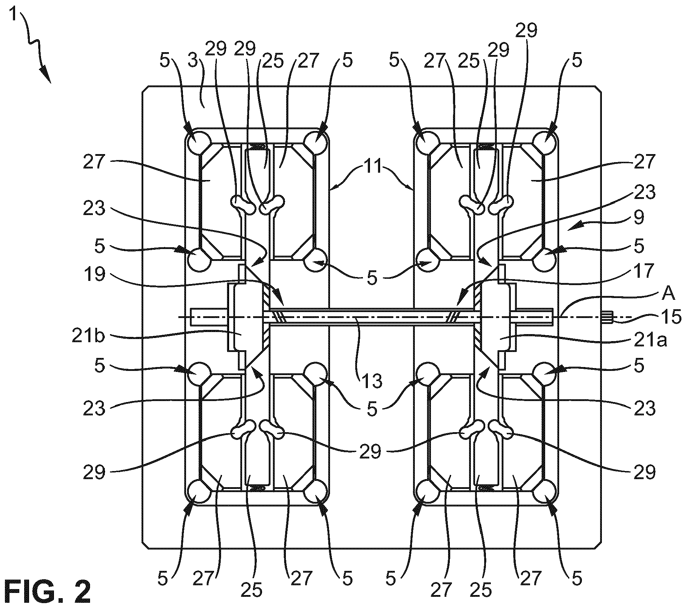

Dargestellt ist in Figur 1 eine Nullpunktspannplatte 1 mit einem Grundkörper 3. In dem Grundkörper 3 sind mehrere Montageausnehmungen 5 eingelassen, die jeweils zur Aufnahme eines korrespondierend geformten Montageelements bzw. Montagefußes 6 (nicht dargestellt) eingerichtet sind. Jeweils vier Montageausnehmungen 5 sind zu je einem Spannnest 7 zusammengefasst. Wie sich ferner aus Figur 2 näher ergibt, weist die Nullpunktspannplatte 1 gemäß dem bevorzugten Ausführungsbeispiel einen Befestigungsmechanismus 9 auf, der in den Grundkörper 3 der Nullpunktspannplatte 1 eingelassen ist. Hierfür sind vorzugsweise eine oder mehrere Ausnehmungen 11 in den Grundkörper 3 eingebracht.

Der Befestigungsmechanismus 9 weist ein Antriebselement 13, vorliegend exemplarisch in Form einer Antriebsspindel, auf, das einen Werkzeugangriff 15 außenseitig am Grundkörper 3 umfasst.

Das Antriebselement 13 weist vorzugsweise einen ersten Gewindebereich 17 auf, in dem ein erster Längsschieber 21a angeordnet und mit dem Gewinde in Eingriff befindlich ist. In Richtung ihrer Längsachse L beabstandet befindet sich an dem Antriebselement 13 ferner ein zweiter Gewindeabschnitt 19, vorzugsweise mit zu dem ersten Gewindeabschnitt 17 entgegengesetzt ausgebildeter Steigungsrichtung. In dem zweiten Abschnitt 19 ist ein zweiter Längsschieber 21b angeordnet und in Eingriff befindlich.

Mit jedem der Längsschieber 21a, b ist jeweils ein Querschieber 25 wirkverbunden. Während der Längsschieber 21a, b eine Bewegung in Längsrichtung der Achse A des Antriebselements 13 ausführt, wenn das Antriebselement bewegt wird, also beispielsweise die Antriebsspindel rotiert, führen die Querschieber 25 jeweils eine Querbewegung, vorzugsweise senkrecht zu der Achse A, aus. Diese Querschubbewegung wird im Ausführungsbeispiel gemäß Figur 2 mittels einer Schrägführung 23 bewerkstelligt, die beispielsweise in Form einer Kulissenführung ausgebildet sein kann.

Die Querschieber 25 sind jeweils mit einem Paar von Klemmkeilen 27 wirkverbunden. Die Klemmkeile 27 sind jeweils zwischen einer Startposition, in der sie mit den Montageausnehmungen 5 nicht in Eingriff stehen, und einer Endposition, in welcher sie sich in die Montageausnehmungen 5 hinein erstrecken, hin- und herbewegbar.

Um die zentrale Aufgabe der Befestigung von Montagefüßen einer Spannvorrichtung 2 an der Spannplatte 1 auszuüben, werden die Klemmkeile 27 mittels Bewegung des Antriebselements, vorliegend exemplarisch also Rotation der Antriebsspindel, von ihrer Startposition in Richtung ihrer Endposition bewegt, bis sich die Klemmkeile 27 ausreichend weit in die Montageausnehmungen 5 hinein erstrecken und dort in Anlage mit den entsprechenden Montagefüßen geraten, um eine Haltekraft aufzubauen.

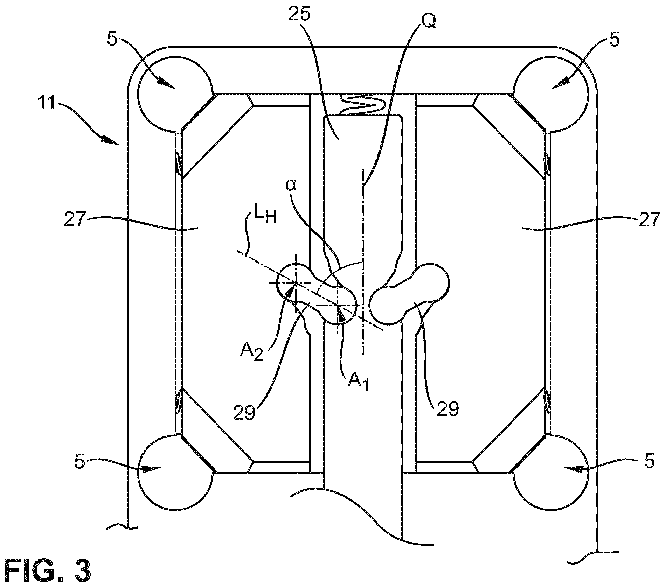

Die Klemmkeile 27 sind jeweils mittels eines ersten Hebelarms 29 mit dem zuständigen Querschieber 25 gekoppelt, wie sich näher aus Figur 3 ergibt.

Zwischen dem Querschieber 25 und dem Klemmkeil 27 ist jeweils ein Hebelarm 29 schwenkbar angeordnet. Der Hebelarm 29 ist hierbei um eine erste Achse A₁ relativ zum Querschieber 25 schwenkbar angeordnet, und um eine zweite Achse A₂ schwenkbar am Klemmkeil gelagert. Zwischen den beiden Achsen A₁, A₂ erstreckt sich eine Längsachse L_{H} des Hebelarms 29. Die Längsachse L_{H} des Hebelarms 29 schließt mit einer Achse des Querschiebers 25Q, die entlang der Querrichtung des Querschiebers und somit im Wesentlichen senkrecht zur Längsachse A des Antriebselements 13 verläuft, einen Winkel α ein. In der Startposition des Klemmkeils 27, in der der Klemmkeil sich noch nicht in die Montageausnehmungen 5 hinein erstreckt, ist α kleiner als beim Erreichen der Endposition des Klemmkeils 27, wenn er sich in die Montageausnehmungen 5 hinein erstreckt.

In Figur 3 ist der jeweilige Klemmkeil 27 kurz vor Erreichen der Endposition dargestellt. Um kinematisch unbestimmte Zustände zu vermeiden, ist der Winkel α auch in der Endposition noch kleiner als 90°, sodass kein Totpunkt überschritten werden muss.

Gleichwohl ist der Winkel α in der Startposition des Klemmkeils 27 signifikant kleiner als beim Erreichen der Endposition. Das hat zur Folge, dass infolge einer Bewegung des Antriebselements 13 bei kleinem Winkel α zunächst eine vergleichsweise geringe Kraftkomponente in Bewegungsrichtung des Klemmkeils 27 auf diesen übertragen wird, weil sich der Winkel α aber als Funktion der Bewegung des Antriebselements 13 relativ schnell ändert. Je größer α wird, desto geringer wird die Änderungsrate des Winkels α in Funktion der Bewegung des Antriebselements 13, während aber im Gegenzug die in Bewegungsrichtung des Klemmkeils 27 übertragene Kraftkomponente steigt. Deswegen übt der Hebelarm 29 der Art nach eine Kniehebelfunktion aus. Die Kniehebelstruktur wird deutlicher erkennbar, wenn man über das in Figur 3 dargestellte Spannnest eine Gesamtschau beider Hebelarme 29 am Querschieber 25 vornimmt. Der Begriff des Kniehebels ist erfindungsgemäß weit auszulegen, weil erfindungsgemäß keine Schwenkbewegung eines Hebels den Auslöser der Querschieberbewegung darstellt, sondern eine Translationsbewegung des Längsschiebers 21a, b (vgl. Figur 2). Das Wirkprinzip ist allerdings dasselbe.

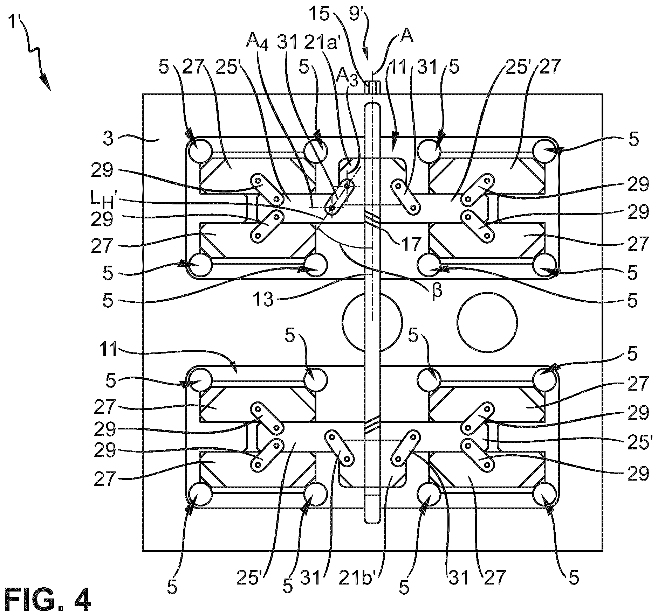

Nachdem die ersten drei Figuren sich um ein erstes bevorzugtes Ausführungsbeispiel der Erfindung drehen, ist in Figur 4 ein zweites bevorzugtes Ausführungsbeispiel der Erfindung gezeigt. In wesentlichen Zügen gleicht das Funktionsprinzip der Nullpunktspannplatte 1' gemäß Figur 4 der Nullpunktspannplatte 1 gemäß den Figuren 1 - 3. Hinsichtlich der Verwendung identischer Bezugszeichen wird zur Vermeidung von Wiederholungen auf die obigen Ausführungen zum ersten Ausführungsbeispiel verwiesen. Ein zentraler Unterschied des zweiten Ausführungsbeispiels gemäß Figur 4 gegenüber dem Ausführungsbeispiel der Figuren 1 - 3 ist in der Wirkverbindung zwischen den Längsschiebern 21a', 21b' einerseits und den Querschiebern 25' andererseits zuversehen.

Die Querschieber 25' und die Längsschieber 21a', 21b' sind gemäß Figur 4 nicht mittels einer Schrägführung, sondern mittels jeweils eines Hebelarms 31 gekoppelt, wobei die Hebelarme 31 wiederum eine Kraftverstärkung nach Art eines Kniehebels ausführen, wie es bereits die (ersten) Hebelarme 29 zwischen den Klemmkeilen 27 und den Querschiebern 25 bzw. 25' tun.

Die (zweiten) Hebelarme 31 sind dazu um eine erste Achse A₃ an den Längsschiebern 21a', 21b' angeordnet, und um eine zweite Achse A₄ schwenkbar an den Querschiebern 25' angeordnet. Durch die Schwenkachsen A₃, A₄ erstreckt sich eine Längsachse L_{H}', die mit der Längsachse A des Antriebselements 13 einen Winkel β einschließt. Für die Kinematik der Hebelverbindung zwischen Längsschieber 21a', 21b' und den Querschiebern 25' gilt Analoges wie für die Hebel 29 zwischen Klemmkeil 27 und Querschieber 25 gemäß Figuren 1 - 3: Die Querschieber 25' sind zwischen einer Startposition und einer Endposition hin- und herbewegbar, wobei die Startposition der Querschieber 25' eingenommen wird, wenn auch die Klemmkeile 27 in ihrer Startposition verharren, und die Endposition der Querschieber 25' eingenommen wird, wenn auch die Klemmkeile 27 in ihrer Endposition verharren. Der Winkel β wird größer, je weiter sich die Querschieber 25' ihrer Endposition annähern.

Das Ausführungsbeispiel gemäß Figur 4 stellt damit eine zweistufige Kraftverstärkung als Funktion der Bewegung des Antriebselements 13 dar.

Das grundsätzliche Wirkprinzip ist aber beiden Ausführungsbeispielen gemein: Im Kraftfluss zwischen dem Antriebselement 13 und den Klemmkeilen 27 sind ein oder mehrere Hebelarme kraftverstärkend in Wirkverbindung zu den jeweils benachbarten Funktionsteilen eingebunden.

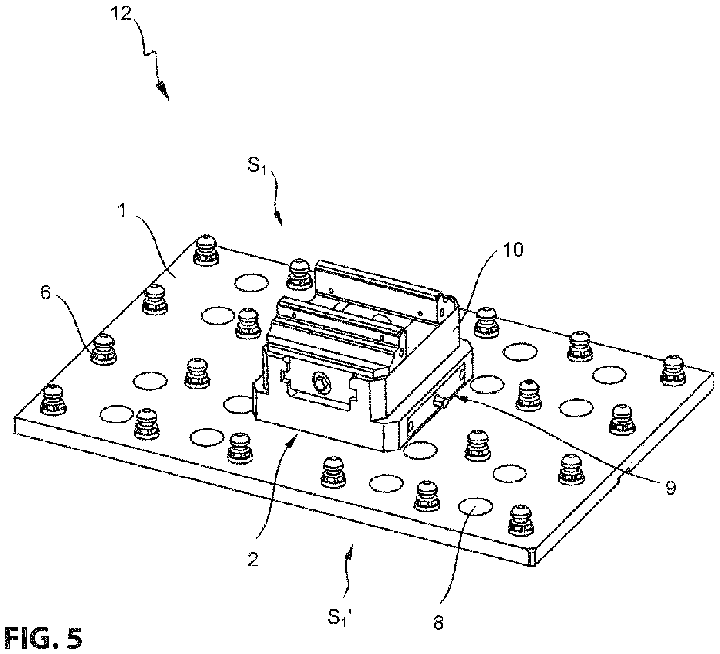

Während die ersten vier Figuren einen ersten Aspekt der Erfindung betrafen, verdeutlicht die Figur 5 einen weiteren erfindungsgemäßen Aspekt.

Figur 5 zeigt ein Nullpunktspannsystem 12 mit einer Nullpunktspannplatte 1 und einer Nullpunktspannvorrichtung 2. In dem gezeigten Ausführungsbeispiel weist nicht die Spannvorrichtung 2, sondern die Spannplatte 1 Montageelemente 6 auf. Die Montageelemente 6 sind in diesem Ausführungsbeispiel als Positionierbolzen ausgebildet. Vorzugsweise sind sie von einer ersten, der Spannvorrichtung 2 zugewandten Seite S₁ der Spannplatte 1 in entsprechende Aufnahmen, insbesondere Passbohrungen, der Spannplatte 1 eingesetzt und dort von einer gegenüberliegenden zweiten Seite S₁' der Spannblatte 1 verschraubt. Figur 5 zeigt ebenfalls eine Vielzahl von Durchgangsöffnungen 8, die die Spannplatte 1 in dem gezeigten Ausführungsbeispiel aufweist. Mittels der Durchgangsöffnungen 8 kann die Spannplatte 1 an einer Werkzeugmaschine, beispielsweise einem Maschinentisch der Werkzeugmaschine, befestigt, vorzugsweise verschraubt, werden.

Die Spannvorrichtung 2 weist in dem in Figur 5 gezeigten Ausführungsbeispiel neben den in Figur 5 nicht sichtbaren Montageausnehmungen an seiner der Spannplatte 1 zugewandten Seite einen Befestigungsmechanismus 9 auf, der dazu eingerichtet ist, die Spannvorrichtung 2 an den Montageelementen 6 auf der Spannplatte 1 zu befestigen, wobei sich die korrespondierend dimensionierten Montageelemente 6 und Montageausnehmungen 5 jeweils paarweise in Eingriff befinden. Der Befestigungsmechanismus 9 ist in einen Grundkörper 10 der Spannvorrichtung 2 integriert beziehungsweise in den Grundkörper 10, und damit in die Spannvorrichtung 2 eingelassen. In dem gezeigten Ausführungsbeispiel weist der Befestigungsmechanismus 9 nur ein Spannnest 7 auf, sodass ein entsprechender Querschnitt durch die Spannvorrichtung 2 in einer Ebene parallel zu der Spannplatte 1 beispielsweise die in Figur 3 gezeigte Form annähme. Es versteht sich, dass dann der in Figur 3 gezeigte Querschieber 25 vorzugsweise einem Ende des Antriebselements 13 entspräche.

## Patentansprüche

1. Nullpunktspannplatte (1) zur Montage von Spannvorrichtungen (2) auf Werkzeugmaschinen, insbesondere auf Fräs- und/oder Drehmaschinen, mit
einer Mehrzahl von Montageausnehmungen (5), die dazu eingerichtet sind, jeweils ein korrespondierend dimensioniertes Montageelement (6) einer Spannvorrichtung (2) in sich aufzunehmen, und
einem in die Spannplatte (1) eingelassenen Befestigungsmechanismus (9), der dazu eingerichtet ist, die Montageelemente (6) reversibel lösbar zu fixieren, wenn jene sich mit den Montageausnehmungen (5) in Eingriff befinden,
wobei der Befestigungsmechanismus (9) ein Antriebselement (13) aufweist und mindestens einen Klemmkeil (27), der mit dem Antriebselement (13) wirkverbunden und dazu eingerichtet ist, sich als Funktion einer Bewegung des Antriebselements (13) in die Montageausnehmungen (5) hinein zu erstrecken,
**dadurch gekennzeichnet, dass** im Kraftfluss zwischen dem Antriebselement (13) und dem Klemmkeil (27) mindestens ein Hebelarm (29, 31) zur Kraftverstärkung vorgesehen ist.

2. Spannplatte nach Anspruch 1,
wobei der Klemmkeil (27) zwischen einer zurückgezogenen Startposition und einer ausgefahrenen Endposition hin- und herbewegbar in der Spannplatte (1) angeordnet ist, und wobei der Hebelarm (29) derart mit dem Klemmkeil (27) gekoppelt ist, dass die Wegänderungsrate des Klemmkeils (27) als Funktion der Bewegung des Antriebselements (13) abnimmt, je weiter sich der Klemmkeil (27) in Richtung seiner Endposition bewegt.

3. Spannplatte nach Anspruch 1 oder 2,
wobei der Klemmkeil (27) mittels des Hebelarms (29) mit einem Querschieber (25, 25') gekoppelt ist, und der Querschieber (25, 25') mit dem Antriebselement (13) wirkverbunden ist,
wobei vorzugsweise
der Querschieber (25,25') eine Achse (Q) in Querrichtung aufweist,
der Hebelarm (29) um eine erste Achse (A₁) schwenkbar an dem Querschieber (25,25') und um eine zweite Achse (A₂) schwenkbar an dem Klemmkeil (27) angeordnet ist,
der Hebelarm (29) eine Längsachse (L_{H}) aufweist, die durch die beiden Achsen hindurchgeht, und wobei
der Winkel (α) zwischen der Längsachse (L_{H}) und der Querachse (Q) in einem Bereich von 40° bis 50° liegt, wenn sich der Klemmkeil (27) in der Startposition befindet, und in einem Bereich von 65° bis 75° liegt, wenn sich der Klemmkeil (27) in der Endposition befindet.

4. Spannplatte nach einem der vorstehenden Ansprüche,
wobei der Querschieber (25) mittels einer Schrägführung (23) mit einem Längsschieber (21a,21b) gekoppelt ist, wobei der Längsschieber (21a,21b) wiederum mittels eines Gewindes mit dem Antriebselement (13) gekoppelt ist.

5. Spannplatte nach einem der vorstehenden Ansprüche,
wobei der Hebelarm (29) ein erster Hebelarm ist, und der Befestigungsmechanismus ferner einen zweiten Hebelarm (31) aufweist, der den Längsschieber (21a',21b') schwenkbar mit dem Querschieber (25') koppelt, wobei vorzugsweise der Querschieber (25') zwischen einer zurückgezogenen Startposition und einer ausgefahrenen Endposition hin- und herbewegbar ist und der zweite Hebelarm (31) derart mit dem Querschieber (25') gekoppelt ist, dass die Wegänderungsrate des Querschiebers (25') als Funktion der Bewegung des Antriebselements (13) abnimmt, je weiter sich der Querschieber (25') in Richtung seiner Endposition bewegt.

6. Spannplatte nach Anspruch 5, wobei
der zweite Hebelarm (31) um eine dritte Achse (A₃) schwenkbar an dem Längsschieber (21a', 21b') und um eine vierte Achse (A₄) schwenkbar an dem Querschieber (25') angeordnet ist,
der zweite Hebelarm (31) eine Längsachse (L_{H}) aufweist, die durch die beiden Achsen hindurchgeht, und wobei
der Winkel (β) zwischen der Längsachse (L_{H}) des zweiten Hebelarms (31) und der Längsachse (A) des Antriebselements (13) in einem Bereich von 30° bis 40° liegt, wenn sich der Querschieber (25') in der Startposition befindet, und in einem Bereich von 65° bis 75° liegt, wenn sich der Querschieber (25') in der Endposition befindet.

7. Spannplatte nach einem der vorstehenden Ansprüche,
wobei die Spannplatte eine Mehrzahl von Spannnestern (7) aufweist, wobei jedes Spannnest (7) vier Montageausnehmungen (5) aufweist,
und wobei der Befestigungsmechanismus (9,9') für jedes Spannnest (7) ein Klemmkeilpaar mit zwei Klemmkeilen (27) aufweist, die mit dem Antriebselement (13) wirkverbunden und dazu eingerichtet sind, sich als Funktion einer Bewegung des Antriebselements (13) in die Montageausnehmungen (5) hinein zu erstrecken, wobei für jedes Klemmkeilpaar im Kraftfluss zwischen dem Antriebselement (13) und dem Klemmkeil (27) jeweils zwei Hebelarme (29) zur Kraftverstärkung vorgesehen sind, die einen Kniehebel bilden;
wobei vorzugsweise - die Klemmkeile (27) des Klemmkeilpaares zwischen einer zurückgezogenen Startposition und einer ausgefahrenen Endposition hin- und herbewegbar in der Spannplatte (1,1') angeordnet ist, und wobei der jeweilige Kniehebel derart mit dem jeweiligen Klemmkeil (27) gekoppelt ist, dass die Wegänderungsrate des Kniehebels als Funktion der Bewegung des Antriebselements (13) abnimmt, je weiter sich der Klemmkeil (27) in Richtung seiner Endposition bewegt, und/oder
der jeweilige Kniehebel mit einem Querschieber (25) gekoppelt ist, und der Querschieber (25) mit dem Antriebselement (13) wirkverbunden ist.

8. Spannplatte nach Anspruch 7, wobei
der Querschieber (25) eine Achse (Q) in Querrichtung aufweist,
der jeweilige Hebelarm (29) des Kniehebels um eine erste Achse (A₁) schwenkbar an dem jeweiligen Querschieber (25) und um eine zweite Achse schwenkbar an dem jeweiligen Klemmkeil (27) angeordnet ist,
der jeweilige Hebelarm (29) des Kniehebels eine Längsachse (L_{H}) aufweist, die durch die beiden Achsen hindurchgeht, und wobei
der Winkel (α) zwischen der Längsachse (L_{H}) und der Querrichtungs-Achse (Q) in einem Bereich von 40° bis 50° liegt, wenn sich der Klemmkeil (27) in der Startposition befindet, und in einem Bereich von 65° bis 75° liegt, wenn sich der Klemmkeil (27) in der Endposition befindet.

9. Spannplatte nach einem der Ansprüche 7 oder 8,
wobei der jeweilige Querschieber (25) mittels einer Schrägführung mit einem Längsschieber gekoppelt ist, wobei der Längsschieber wiederum mittels eines Gewindes mit dem Antriebselement (13) gekoppelt ist.

10. Spannplatte nach einem der Ansprüche 7 bis 9,
wobei die jeweiligen Hebelarme (29) des Kniehebels erste Hebelarme sind, und der Befestigungsmechanismus (9') ferner für jeden Querschieber (25') einen zweiten Hebelarm (31) aufweist, der den Längsschieber (21a',21b') schwenkbar mit dem jeweiligen Querschieber (25') koppelt,
wobei vorzugsweise der jeweilige Querschieber (25') zwischen einer zurückgezogenen Startposition und einer ausgefahrenen Endposition hin- und herbewegbar ist und der zweite Hebelarm (31) derart mit dem jeweiligen Querschieber (25') gekoppelt ist, dass die Wegänderungsrate des jeweiligen Querschiebers als Funktion der Bewegung des Antriebselements (13) abnimmt, je weiter sich der Querschieber (25') in Richtung seiner Endposition bewegt.

11. Spannplatte nach Anspruch 10, wobei
der zweite Hebelarm (31) um eine dritte Achse (A₃) schwenkbar an dem Längsschieber (21a',21b') und um eine vierte Achse (A₄) schwenkbar an dem jeweiligen Querschieber (25') angeordnet ist,
der zweite Hebelarm (31) eine Längsachse (L_{H}) aufweist, die durch die beiden Achsen hindurchgeht, und wobei
der Winkel (b) zwischen der Längsachse (L_{H}) des zweiten Hebelarms (31) und der Längsachse (A) des Antriebselements (13) in einem Bereich von 30° bis 40° liegt, wenn sich der Querschieber (25') in der Startposition befindet, und in einem Bereich von 65° bis 75° liegt, wenn sich der Querschieber (25') in der Endposition befindet.

12. Spannplatte nach einem der Ansprüche 7 bis 11,
wobei das Antriebselement (13) mit mehreren Längsschiebern (21a,21b;21a',21b') wirkverbunden ist, wobei jeder der Längsschieber (21a,21b;21a',21b') mit einem oder mehreren Querschiebern (25,25') wirkverbunden ist,
wobei vorzugsweise das Antriebselement (13) eine Antriebsspindel ist, und einen ersten Gewindeabschnitt (17) mit einer ersten Steigungsrichtung aufweist, mit welchem ein erster Längsschieber (21a,21a') in Eingriff steht, und wenigstens einen zweiten Gewindeabschnitt (19), vorzugsweise mit einer der ersten Steigungsrichtung entgegengesetzten zweiten Steigungsrichtung, mit welchem ein zweiter Längsschieber (21b,21b') in Eingriff steht.

13. Werkzeugmaschine, insbesondere Dreh- und/oder Fräsmaschine, mit
einer ortsfest auf der Werkzeugmaschine angebrachten Nullpunktspannplatte (1), die eine Mehrzahl von Montageausnehmungen (5) aufweist,
einer Spannvorrichtung (2), welche eine Mehrzahl von zu den Montageausnehmungen (5) korrespondierend dimensionierten Montageelementen (6) aufweist, die jeweils mit einer der Montageausnehmungen (5) in Eingriff stehen,
**dadurch gekennzeichnet, dass** die Nullpunktspannplatte (1) nach einem der vorstehenden Ansprüche ausgebildet ist.

14. Spannvorrichtung (2) zum Spannen von Werkstücken, die dazu eingerichtet ist, mittels einer Nullpunktspannplatte auf Werkzeugmaschinen, insbesondere auf Fräs- und/oder Drehmaschinen, montiert zu werden, mit
einer Mehrzahl von Montageausnehmungen (5), die dazu eingerichtet sind, jeweils ein korrespondierend dimensioniertes Montageelement (6) einer Spannplatte (1) in sich aufzunehmen, und
einem in die Spannvorrichtung (2) eingelassenen Befestigungsmechanismus (9), der dazu eingerichtet ist, die Montageelemente (6) reversibel lösbar zu fixieren, wenn jene sich mit den Montageausnehmungen (5) in Eingriff befinden,
wobei der Befestigungsmechanismus (9) ein Antriebselement (13) aufweist, und mindestens einen Klemmkeil (27), der mit dem Antriebselement (13) wirkverbunden und dazu eingerichtet ist, sich als Funktion einer Bewegung des Antriebselements (13) in die Montageausnehmungen (5) hinein zu erstrecken,
**dadurch gekennzeichnet, dass** im Kraftfluss zwischen dem Antriebselement (13) und dem Klemmkeil (27) mindestens ein Hebelarm (29, 31) zur Kraftverstärkung vorgesehen ist.

15. Nullpunktspannsystem (12) für Werkzeugmaschinen, insbesondere für Fräs- und/oder Drehmaschinen, mit
einer Nullpunktspannplatte (1), die dazu eingerichtet ist, ortsfest relativ zu der Werkzeugmaschine angeordnet zu werden,
einer Spannvorrichtung (2) zum Spannen von Werkstücken, die dazu eingerichtet ist, auf der Spannplatte (1) montiert zu werden, und
einem Befestigungsmechanismus (9), der dazu eingerichtet ist, die Spannvorrichtung (2) an der Spannplatte (1) reversibel lösbar zu befestigen,
wobei die Spannplatte (1) nach einem der Ansprüche 1 bis 12 ausgebildet ist, und/oder die Spannvorrichtung (2) nach Anspruch 14 ausgebildet ist.

## Claims

1. Zero point clamping plate (1) for assembling clamping apparatuses (2) on machine tools, in particular on milling machines and/or lathes, having a plurality of assembly recesses (5) which are configured to each receive a correspondingly sized assembly element (6) of a clamping apparatus (2), and
a securing mechanism (9) which is recessed in the clamping plate (1) and which is configured to fix the assembly elements (6) in a reversibly releasable manner when they are in engagement with the assembly recesses (5),
wherein the securing mechanism (9) has a drive element (13) and at least one clamping wedge (27) which is operationally connected to the drive element (13) and which is configured to extend as a function of a movement of the drive element (13) into the assembly recesses (5),
**characterised in that** in the force path between the drive element (13) and the clamping wedge (27) at least one lever arm (29, 31) is provided for force amplification.

2. Clamping plate according to claim 1,
wherein the clamping wedge (27) is arranged in the clamping plate (1) so as to be able to be moved back and forth between a retracted start position and an extended end position and wherein the lever arm (29) is coupled to the clamping wedge (27) in such a manner that the path change rate of the clamping wedge (27) decreases as a function of the movement of the drive element (13), the further the clamping wedge (27) moves in the direction of the end position thereof.

3. Clamping plate according to claim 1 or 2,
wherein the clamping wedge (27) is coupled by means of the lever arm (29) to a transverse sliding member (25, 25'), and the transverse sliding member (25, 25') is operationally connected to the drive element (13),
wherein preferably
the transverse sliding member (25, 25') has an axis (Q) in the transverse direction,
the lever arm (29) is arranged on the transverse sliding member (25, 25') so as to be able to be pivoted about a first axis (A₁) and on the clamping wedge (27) so as to be able to be pivoted about a second axis (A₂),
the lever arm (29) has a longitudinal axis (L_{H}) which extends through the two axes, and wherein
the angle (α) between the longitudinal axis (L_{H}) and the transverse axis (Q) is in a range from 40° to 50° when the clamping wedge (27) is in the start position and in a range from 65° to 75° when the clamping wedge (27) is in the end position.

4. Clamping plate according to any one of the preceding claims,
wherein the transverse sliding member (25) is coupled to a longitudinal sliding member (21a, 21b) by means of an oblique guide (23), wherein the longitudinal sliding member (21a, 21b) is in turn coupled to the drive element (13) by means of a thread.

5. Clamping plate according to any one of the preceding claims,
wherein the lever arm (29) is a first lever arm and the securing mechanism further has a second lever arm (31) which pivotably couples the longitudinal sliding member (21a', 21b') to the transverse sliding member (25'), wherein the transverse sliding member (25') can preferably be moved back and forth between a retracted start position and an extended end position and the second lever arm (31) is coupled to the transverse sliding member (25') in such a manner that the path change rate of the transverse sliding member (25') decreases as a function of the movement of the drive element (13), the further the transverse sliding member (25') moves in the direction of the end position thereof.

6. Clamping plate according to claim 5,
wherein the second lever arm (31) is arranged on the longitudinal sliding member (21a', 21b') so as to be able to be pivoted about a third axis (A₃) and on the transverse sliding member (25') so as to be able to be pivoted about a fourth axis (A₄),
the second lever arm (31) has a longitudinal axis (L_{H}) which extends through the two axes, and wherein
the angle (β) between the longitudinal axis (L_{H}) of the second lever arm (31) and the longitudinal axis (A) of the drive element (13) is in a range from 30° to 40° when the transverse sliding member (25') is in the start position and in a range from 65° to 75° when the transverse sliding member (25') is in the end position.

7. Clamping plate according to any one of the preceding claims,
wherein the clamping plate has a plurality of clamping nests (7), wherein each clamping nest (7) has four assembly recesses (5),
and wherein the securing mechanism (9, 9') for each clamping nest (7) has a clamping wedge pair with two clamping wedges (27) which are operationally connected to the drive element (13) and which are configured to extend as a function of a movement of the drive element (13) into the assembly recesses (5), wherein for each clamping wedge pair in the force path between the drive element (13) and the clamping wedge (27) there are provided for force amplification two lever arms (29) which form a toggle lever;
wherein the clamping wedges (27) of the clamping wedge pair are preferably arranged in the clamping plate (1, 1') so as to be able to be moved back and forth between a retracted start position and an extended end position and wherein the respective toggle lever is coupled to the respective clamping wedge (27) in such a manner that the path change rate of the toggle lever decreases as a function of the movement of the drive element (13), the further the clamping wedge (27) moves in the direction of the end position thereof, and/or
the respective toggle lever is coupled to a transverse sliding member (25) and the transverse sliding member (25) is operationally connected to the drive element (13).

8. Clamping plate according to claim 7,
wherein the transverse sliding member (25) has an axis (Q) in the transverse direction,
the respective lever arm (29) of the toggle lever is arranged on the respective transverse sliding member (25) so as to be able to be pivoted about a first axis (A₁) and on the respective clamping wedge (27) so as to be able to be pivoted about a second axis,
the respective lever arm (29) of the toggle lever has a longitudinal axis (L_{H}) which extends through the two axes, and wherein
the angle (α) between the longitudinal axis (L_{H}) and the transverse direction axis (Q) is in a range from 40° to 50° when the clamping wedge (27) is in the start position and in a range from 65° to 75° when the clamping wedge (27) is in the end position.

9. Clamping plate according to either claim 7 or claim 8, wherein the respective transverse sliding member (25) is coupled to a longitudinal sliding member by means of an oblique guide, wherein the longitudinal sliding member is in turn coupled to the drive element (13) by means of a thread.

10. Clamping plate according to any one of claims 7 to 9, wherein the respective lever arms (29) of the toggle lever are first lever arms and the securing mechanism (9') further has for each transverse sliding member (25') a second lever arm (31) which pivotably couples the longitudinal sliding member (21a', 21b') to the respective transverse sliding member (25'),
wherein the respective transverse sliding member (25') can preferably be moved back and forth between a retracted start position and an extended end position and the second lever arm (31) is coupled to the respective transverse sliding member (25') in such a manner that the path change rate of the respective transverse sliding member decreases as a function of the movement of the drive element (13), the further the transverse sliding member (25') moves in the direction of the end position thereof.

11. Clamping plate according to claim 10,
wherein the second lever arm (31) is arranged on the longitudinal sliding member (21a', 21b') so as to be able to be pivoted about a third axis (A₃) and on the respective transverse sliding member (25') so as to be able to be pivoted about a fourth axis (A₄),
the second lever arm (31) has a longitudinal axis (L_{H}) which extends through the two axes, and wherein
the angle (b) between the longitudinal axis (L_{H}) of the second lever arm (31) and the longitudinal axis (A) of the drive element (13) is in a range from 30° to 40° when the transverse sliding member (25') is in the start position and in a range from 65° to 75° when the transverse sliding member (25') is in the end position.

12. Clamping plate according to any one of claims 7 to 11, wherein the drive element (13) is operationally connected to a plurality of longitudinal sliding members (21a, 21b; 21a', 21b'), wherein each of the longitudinal sliding members (21a, 21b; 21a', 21b') is operationally connected to one or more transverse sliding members (25, 25'),
wherein the drive element (13) is preferably a drive spindle and has a first threaded portion (17) which has a first pitch direction and with which a first longitudinal sliding member (21a, 21a') is in engagement, and at least a second threaded portion (19), which preferably has a second pitch direction which is opposite the first pitch direction and with which a second longitudinal sliding member (21b, 21b') is in engagement.

13. Machine tool, in particular a lathe and/or a milling machine, having
a zero point clamping plate (1) which is fitted in a fixed manner to the machine tool and which has a plurality of assembly recesses (5),
a clamping apparatus (2) which has a plurality of assembly elements (6) which are sized so as to correspond to the assembly recesses (5) and which are each in engagement with one of the assembly recesses (5),
**characterised in that** the zero point clamping plate (1) is constructed according to any one of the preceding claims.

14. Clamping apparatus (2) for clamping workpieces, which is configured to be mounted on machine tools, in particular on milling machines and/or lathes, by means of a zero point clamping plate, having
a plurality of assembly recesses (5) which are configured to receive therein in each case a correspondingly sized assembly element (6) of a clamping plate (1), and
a securing mechanism (9) which is recessed in the clamping apparatus (2) and which is configured to fix the assembly elements (6) in a reversibly releasable manner when they are in engagement with the assembly recesses (5),
wherein the securing mechanism (9) has a drive element (13) and at least one clamping wedge (27) which is operationally connected to the drive element (13) and which is configured to extend as a function of a movement of the drive element (13) into the assembly recesses (5),
**characterised in that** in the force path between the drive element (13) and the clamping wedge (27) at least one lever arm (29, 31) is provided for force amplification.

15. Zero point clamping system (12) for machine tools, in particular for milling machines and/or lathes, having a zero point clamping plate (1) which is configured to be arranged in a fixed manner relative to the machine tool,
a clamping apparatus (2) for clamping workpieces, which is configured to be mounted on the clamping plate (1), and
a securing mechanism (9) which is configured to secure the clamping apparatus (2) to the clamping plate (1) in a reversibly releasable manner,
wherein the clamping plate (1) is constructed according to any one of claims 1 to 12 and/or the clamping apparatus (2) is constructed according to claim 14.

## Revendications

1. Plaque de serrage à point zéro (1) pour le montage de dispositifs de serrage (2) sur des machines-outils, en particulier sur des fraiseuses et/ou tours, avec
une pluralité d'évidements de montage (5), qui sont conçus pour recevoir en eux-mêmes respectivement un élément de montage (6) dimensionné de manière correspondante d'un dispositif de serrage (2), et
un mécanisme de fixation (9) inséré dans la plaque de serrage (1), qui est conçu pour fixer les éléments de montage (6) de façon détachable de manière réversible, lorsque ceux-ci se trouvent en prise avec les évidements de montage (5),
dans laquelle le mécanisme de fixation (9) présente un élément d'entraînement (13) et au moins une clavette de blocage (27), qui est en liaison fonctionnelle avec l'élément d'entraînement (13) et conçue pour s'étendre à l'intérieur des évidements de montage (5) en fonction d'un mouvement de l'élément d'entraînement (13),
**caractérisée en ce qu'**au moins un bras de levier (29, 31) est prévu dans le flux de forces entre l'élément d'entraînement (13) et la clavette de blocage (27) pour l'amplification de la force.

2. Plaque de serrage selon la revendication 1,
dans laquelle la clavette de blocage (27) est disposée dans la plaque de serrage (1) de manière à pouvoir se déplacer en va-et-vient entre une position de départ rentrée et une position finale sortie, et dans laquelle le bras de levier (29) est accouplé à la clavette de blocage (27) de telle sorte que le taux de changement de course de la clavette de blocage (27) diminue en fonction du mouvement de l'élément d'entraînement (13), à mesure que la clavette de blocage (27) se déplace en direction de sa position finale.

3. Plaque de serrage selon la revendication 1 ou 2,
dans laquelle la clavette de blocage (27) est accouplée à un coulisseau transversal (25, 25') au moyen du bras de levier (29), et le coulisseau transversal (25, 25') est en liaison fonctionnelle avec l'élément d'entraînement (13),
dans laquelle de préférence
le coulisseau transversal (25, 25') présente un axe transversal (Q) dans la direction transversale,
le bras de levier (29) est disposé sur le coulisseau transversal (25, 25') de manière à pouvoir pivoter autour d'un premier axe (A₁) et sur la clavette de blocage (27) de manière à pouvoir pivoter autour d'un deuxième axe (A₂),
le bras de levier (29) présente un axe longitudinal (L_{H}), qui passe par les deux axes, et dans laquelle
l'angle (α) se situe entre l'axe longitudinal (L_{H}) et l'axe transversal (Q) dans une plage de 40° à 50°, lorsque la clavette de blocage (27) se trouve dans la position de départ, et se situe dans une plage de 65° à 75°, lorsque la clavette de blocage (27) se trouve dans la position finale.

4. Plaque de serrage selon l'une quelconque des revendications précédentes,
dans laquelle le coulisseau transversal (25) est accouplé à un coulisseau longitudinal (21a, 21b) au moyen d'un guidage oblique (23), dans laquelle le coulisseau longitudinal (21a, 21b) est à son tour accouplé à l'élément d'entraînement (13) au moyen d'un filetage.

5. Plaque de serrage selon l'une quelconque des revendications précédentes,
dans laquelle le bras de levier (29) est un premier bras de levier, et le mécanisme de fixation présente en outre un deuxième bras de levier (31), qui accouple le coulisseau longitudinal (21a', 21b') de manière pivotante au coulisseau transversal (25'), dans laquelle de préférence le coulisseau transversal (25') peut se déplacer en va-et-vient entre une position de départ rentrée et une position finale sortie et le deuxième bras de levier (31) est accouplé au coulisseau transversal (25') de telle sorte que le taux de modification de course du coulisseau transversal (25') diminue en fonction du mouvement de l'élément d'entraînement (13), à mesure que le coulisseau transversal (25') se déplace en direction de sa position finale.

6. Plaque de serrage selon la revendication 5, dans laquelle
le deuxième bras de levier (31) est disposé sur le coulisseau longitudinal (21a', 21b') de manière à pouvoir pivoter autour d'un troisième axe (A₃) et sur le coulisseau transversal (25') de manière à pouvoir pivoter autour d'un quatrième axe (A₄),
le deuxième bras de levier (31) présente un axe longitudinal (L_{H}), qui passe par les deux axes, et dans laquelle
l'angle (β) se situe entre l'axe longitudinal (L_{H}) du deuxième bras de levier (31) et l'axe longitudinal (A) de l'élément d'entraînement (13) dans une plage de 30° à 40°, lorsque le coulisseau transversal (25') se trouve dans la position de départ, et se situe dans une plage de 65° à 75°, lorsque le coulisseau transversal (25') se trouve dans la position finale.

7. Plaque de serrage selon l'une quelconque des revendications précédentes,
dans laquelle la plaque de serrage présente une pluralité de cavités de serrage (7), dans laquelle chaque cavité de serrage (7) présente quatre évidements de montage (5),
et dans laquelle le mécanisme de fixation (9, 9') pour chaque cavité de serrage (7) présente une paire de clavettes de blocage avec deux clavettes de blocage (27), qui sont en liaison fonctionnelle avec l'élément d'entraînement (13) et conçues pour s'étendre à l'intérieur des évidements de montage (5) en fonction d'un mouvement de l'élément d'entraînement (13), dans laquelle pour chaque paire de clavettes de blocage respectivement deux bras de levier (29) sont prévus dans le flux de forces entre l'élément d'entraînement (13) et la clavette de blocage (27) pour l'amplification de force, qui forment un levier à genouillère ;
dans laquelle de préférence - les clavettes de blocage (27) de la paire de clavettes de blocage sont disposées dans la plaque de serrage (1, 1') de manière à pouvoir se déplacer en va-et-vient entre une position de départ rentrée et une position finale sortie, et dans laquelle le levier à genouillère respectif est accouplé à la clavette de blocage (27) respective de telle sorte que le taux de changement de course du levier à genouillère diminue en fonction du mouvement de l'élément d'entraînement (13), à mesure que la clavette de blocage (27) se déplace en direction de sa position finale, et/ou
le levier à genouillère respectif est accouplé à un coulisseau transversal (25), et le coulisseau transversal (25) est en liaison fonctionnelle avec l'élément d'entraînement (13).

8. Plaque de serrage selon la revendication 7, dans laquelle
le coulisseau transversal (25) présente un axe (Q) dans la direction transversale,
le bras de levier (29) respectif du levier à genouillère est disposé sur le coulisseau transversal (25) respectif de manière à pouvoir pivoter autour d'un premier axe (A₁) et sur la clavette de blocage (27) respective de manière à pouvoir pivoter autour d'un deuxième axe,
le bras de levier (29) respectif du levier à genouillère présente un axe longitudinal (L_{H}), qui passe par les deux axes, et dans laquelle
l'angle (α) se situe entre l'axe longitudinal (L_{H}) et l'axe de direction transversale (Q) dans une plage de 40° à 50°, lorsque la clavette de blocage (27) se trouve dans la position de départ, et se situe dans une plage de 65° à 75°, lorsque la clavette de blocage (27) se trouve dans la position finale.

9. Plaque de serrage selon l'une quelconque des revendications 7 ou 8,
dans laquelle le coulisseau transversal (25) respectif est accouplé à un coulisseau longitudinal au moyen d'un guidage oblique, dans laquelle le coulisseau longitudinal est à son tour accouplé à l'élément d'entraînement (13) au moyen d'un filetage.

10. Plaque de serrage selon l'une quelconque des revendications 7 à 9,
dans laquelle les bras de levier (29) respectifs du levier à genouillère sont des premiers bras de levier, et le mécanisme de fixation (9') présente en outre pour chaque coulisseau transversal (25') un deuxième bras de levier (31), qui accouple le coulisseau longitudinal (21a', 21b') de manière pivotante au coulisseau transversal (25') respectif,
dans laquelle de préférence le coulisseau transversal (25') respectif peut se déplacer en va-et-vient entre une position de départ rentrée et une position finale sortie et le deuxième bras de levier (31) est accouplé au coulisseau transversal (25') respectif, de telle sorte que le taux de modification de course du coulisseau transversal respectif diminue en fonction du mouvement de l'élément d'entraînement (13), à mesure que le coulisseau transversal (25') se déplace en direction de sa position finale.

11. Plaque de serrage selon la revendication 10, dans laquelle
le deuxième bras de levier (31) est disposé sur le coulisseau longitudinal (21a', 21b') de manière à pouvoir pivoter autour d'un troisième axe (A₃) et sur le coulisseau transversal (25') respectif de manière à pouvoir pivoter autour d'un quatrième axe (A₄),
le deuxième bras de levier (31) présente un axe longitudinal (L_{H}), qui passe par les deux axes, et dans laquelle
l'angle (β) se situe entre l'axe longitudinal (L_{H}) du deuxième bras de levier (31) et l'axe longitudinal (A) de l'élément d'entraînement (13) dans une plage de 30° à 40°, lorsque le coulisseau transversal (25') se trouve dans la position de départ, et se situe dans une plage de 65° à 75°, lorsque le coulisseau transversal (25') se trouve dans la position finale.

12. Plaque de serrage selon l'une quelconque des revendications 7 à 11,
dans laquelle l'élément d'entraînement (13) est en liaison fonctionnelle avec plusieurs coulisseaux longitudinaux (21a, 21b; 21a', 21b'), dans laquelle chacun des coulisseaux longitudinaux (21a, 21b ; 21a', 21b') est en liaison fonctionnelle avec un ou plusieurs coulisseaux transversaux (25, 25'),
dans laquelle de préférence l'élément d'entraînement (13) est une broche d'entraînement, et présente une première partie filetée (17) avec une première direction de pas, avec laquelle un premier coulisseau longitudinal (21a, 21a') est en prise, et au moins une deuxième partie filetée (19), de préférence avec une deuxième direction de pas opposée à la première direction de pas, avec laquelle un deuxième coulisseau longitudinal (21b, 21b') est en prise.

13. Machine-outil, en particulier fraiseuse et/ou tour, avec
une plaque de serrage à point zéro (1) placée de manière fixe sur la machine-outil, qui présente une pluralité d'évidements de montage (5),
un dispositif de serrage (2), lequel présente une pluralité d'éléments de montage (6) dimensionnés de manière correspondante aux évidements de montage (5), qui sont en prise respectivement avec un des évidements de montage (5),
**caractérisée en ce que** la plaque de serrage à point zéro (1) est réalisée selon l'une quelconque des revendications précédentes.

14. Dispositif de serrage (2) pour le serrage de pièces, qui est conçu pour être monté au moyen d'une plaque de serrage à point zéro sur des machines-outils, en particulier sur des fraiseuses et/ou tours, avec
une pluralité d'évidements de montage (5), qui sont conçus pour recevoir en eux-mêmes respectivement un élément de montage (6) dimensionné de manière correspondante d'une plaque de serrage (1), et
un mécanisme de fixation (9) inséré dans le dispositif de serrage (2), qui est conçu pour fixer les éléments de montage (6) de façon détachable de manière réversible, lorsque ceux-ci se trouvent en prise avec les évidements de montage (5),
dans lequel le mécanisme de fixation (9) présente un élément d'entraînement (13), et au moins une clavette de blocage (27), qui est en liaison fonctionnelle avec l'élément d'entraînement (13) et est conçue pour s'étendre à l'intérieur des évidements de montage (5) en fonction d'un mouvement de l'élément d'entraînement (13),
**caractérisé en ce qu'**au moins un bras de levier (29, 31) est prévu dans le flux de forces entre l'élément d'entraînement (13) et la clavette de blocage (27) pour l'amplification de la force.

15. Système de serrage à point zéro (12) pour des machines-outils, en particulier pour des fraiseuses et/ou tours, avec
une plaque de serrage à point zéro (1), qui est conçue pour être disposée de manière fixe par rapport à la machine-outil,
un dispositif de serrage (2) pour le serrage de pièces, qui est conçu pour être monté sur la plaque de serrage (1), et
un mécanisme de fixation (9), qui est conçu pour fixer le dispositif de serrage (2) de façon détachable de manière réversible sur la plaque de serrage (1),
dans lequel la plaque de serrage (1) est réalisée selon l'une quelconque des revendications 1 à 12, et/ou le dispositif de serrage (2) est réalisé selon la revendication 14.
